# EUROPEAN PATENT APPLICATION

(11) **EP 1 656 003 A2**
(43) Date of publication of application: **10.05.2006**
(21) Application number: 05110352.1
(22) Date of filing: 04.11.2005
(51) Int. Cl.: H05B 41/285

(54) **Backlight driving device**

(30) Priority: 05.11.2004 KR 2004089960
(71) Applicant: SAMSUNG ELECTRONICS CO., LTD., Suwon-si Gyeonggi-do 442-742 (KR)
(72) Inventor: Lee, Kyoung-geun, Suwon-si, Gyeonggi-do (KR); Lee, Jung-seob, Suwon-si, Gyeonggi-do (KR); Lee, Jong-cheoi, Suwon-si, Gyeonggi-do (KR)
(74) Representative: Walaski, Jan Filip

(57) **Abstract**

A back light driving device having an inverter circuit connected with a lamp, the inverter circuit including a driving voltage generating unit provided with a plurality of lead parts, which is joined with a power input unit and a switch unit for supplying a driving voltage to the lamp, wherein each of the lead parts includes a plurality of lead terminals. Accordingly, the back light driving device is capable of preventing malfunctions due to disconnections or poor lead terminal junctions of the driving voltage generating unit.

## Description

The present invention relates to a back light driving device. More particularly, the present invention relates to a driving voltage generating unit provided with a plurality of lead terminals.

Presently, many display devices such as liquid crystal display (LCD) devices, have small, yet convenient display screens. Such LCD devices may further have a back light device disposed at a rear portion of the display screen to function as a light source.

In Korean Patent Publication No. 10-2004-0009103, a back light driving device comprising an inverter connected with a lamp is disclosed. The inverter has therein a driving unit for driving the lamp, a control unit, a transformer, a ballast capacitor, a resistor, and a diode.

The transformer is disposed between the driving unit and the lamp, and the lamp receives a driving signal from the driving unit through the transformer. The transformer is soldered on a base plate using only one pair of lead wires. Therefore, if one of the lead wires is poorly soldered, the transformer may malfunction due to a disconnection or a poor lead wire junction.

The invention aims to address the above problem.

According to the invention, there is provided a back light driving device comprising an inverter circuit connected to a lamp, wherein the inverter circuit comprises a driving voltage generating unit provided with a plurality of leads, the driving voltage generating unit being connected to a power input unit and switch unit for supplying a driving voltage to the lamp, wherein each of the leads comprises a plurality of lead terminals.

According to an embodiment of the present invention, each of the leads comprises a main lead terminal connected to the driving voltage generating unit and a subsidiary lead terminal connected to the main lead terminal.

According to an embodiment of the present invention, the driving voltage generating unit comprises a transformer.

Embodiments of the invention will now be described, by way of example, with reference to the accompanying drawings, in which:
Figure 1 is a perspective view of a driving voltage generating unit according to an embodiment of the present invention;
Figure 2 is a schematic view showing an inside arrangement of a driving voltage generating unit according to an embodiment of the present invention; and
Figure 3 is a schematic block diagram of an inverter circuit according to an embodiment of the present invention.

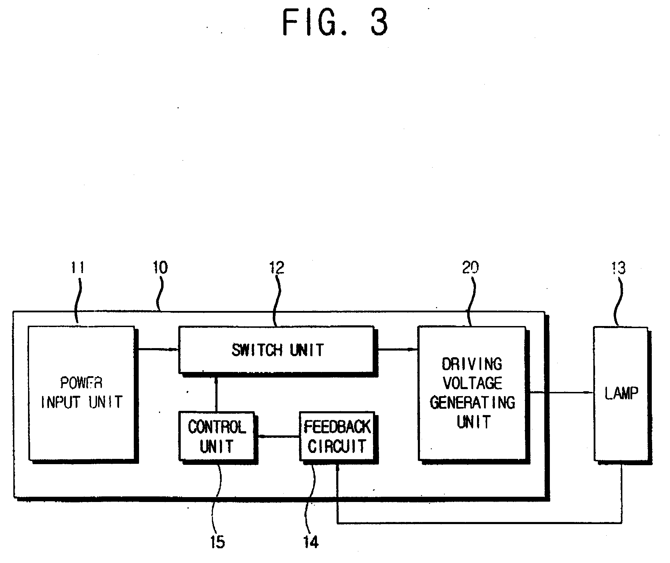

As shown in Figure 3, a back light driving device, according to an embodiment of the present invention, comprises an inverter circuit 10 connected to a lamp 13. The inverter circuit 10 comprises a power input unit 11, a switch unit 12, a driving voltage generating unit 20, a feedback circuit 14, and a control unit 15.

An input signal of the power input unit 11 is switched by the switch unit 12 and supplied to the lamp 13 through the driving voltage generating unit 20. The feedback circuit 14 detects an electric current from the lamp 13, compares the electric current with a reference current and provides a signal to the control unit 15. The control unit 15 controls the switch unit 12 according to the signal from the feedback circuit 14.

The driving voltage generating unit 20 comprises a transformer and the switching unit may comprise a number of C-MOS FET circuits for making up a DC/AC inverter as well known in the art. The switch unit and driving voltage generating unit converts the DC voltage (for example, DC 14V) from the power input unit 11 and transforms it to an AC voltage for supplying to the lamp 13.

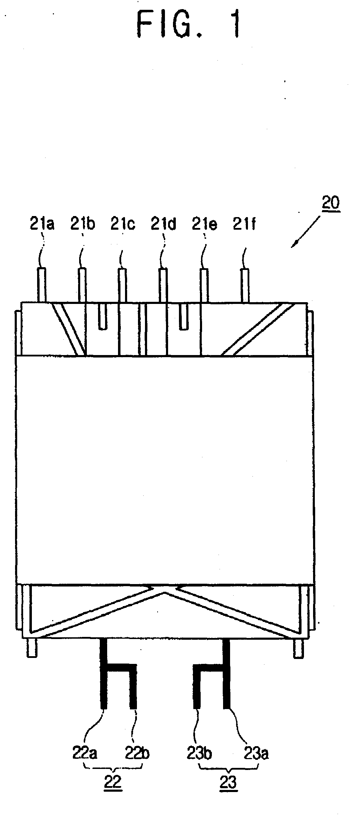

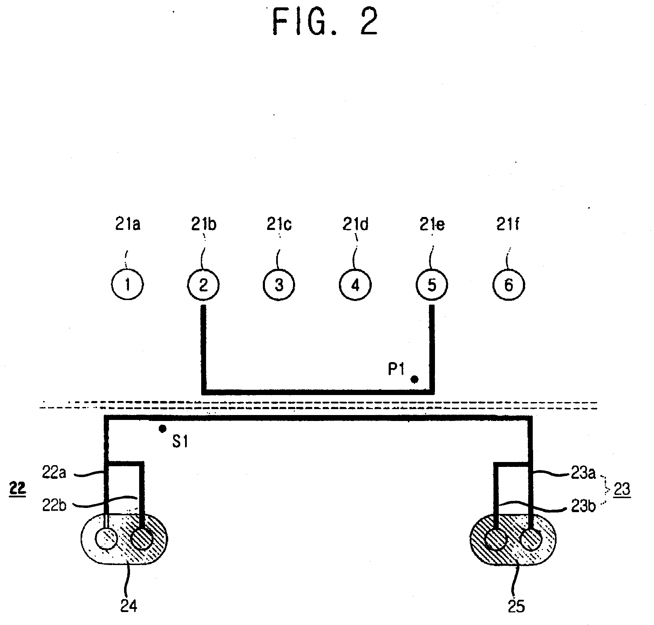

As shown Figure 1, the driving voltage generating unit 20 has therein a plurality of pins 21a to 21f, and first and second lead parts 22 and 23. As shown in Figure 2, the primary windings of the transformer are connected to first and second pins 21b and 21 e, whereas the secondary windings are connected to the first and second lead parts 22 and 23. Moreover, the current in the primary windings is supplied from the power supply unit 11 through the pins and the switch unit 12 and the current in the secondary windings is supplied to the lamp 13 through the first and second lead parts 22 and 23 and an electrode (not shown) of the lamp 13.

A first junction 24 is formed where the first lead part 22 is soldered to the base plate, for example, a printed circuit board, for connection to the circuit 10. A second junction 25 is formed where the second lead part 23 is soldered to the base plate.

The first lead part 22 comprises a first main lead terminal 22a and a first subsidiary lead terminal 22b both connected to the first junction 24. The second lead part 23 comprises a second main lead terminal 23a and a second subsidiary lead terminal 23b both connected to the second junction 25.

Accordingly, even though one of the first main and subsidiary lead terminals 22a and 22b may be poorly joined to the base plate and disconnect the transformer from the circuit 10, the back light driving device can function normally via the other terminal. Furthermore, heat generation and sparking due to the poor junction can be prevented. In like fashion, even though one of the second main and subsidiary lead terminals 23a and 23b may be poorly joined or become disconnected from the base plate, the back light driving device can function normally via the other terminal. As with the first main and subsidiary lead terminals, heat generation and sparking due to the poor junction can be prevented.

An operating process of the back light driving device according to the above exemplary configuration will now be described in greater detail.

Returning to Figure 3, the input signal of the power source input unit 11 is switched by the switch unit 12 and is provided to the lamp 13 through the driving voltage generating unit 20. The feedback circuit 14 detects the electric current from the lamp 13, compares the electric current with the reference electric current, and provides the control unit 15 with the signal. The control unit 15 controls the switch unit 12 according to the signal from the feedback circuit 14.

The first main and subsidiary lead terminals 22a and 22b of the driving voltage generating unit 20 are joined with the base plate at junction 24, and the second main and subsidiary lead terminals 23a and 23b of the driving voltage generating unit 20 are joined with the base plate at junction 25. Therefore, even though one of the first main and subsidiary lead terminals 22a and 22b may be poorly joined to or may become disconnected from the junction, the back light driving device can function normally via the other terminal. Also, even though one of the second main and subsidiary lead terminals 23a and 23b may be poorly joined or may become disconnected, the back light driving device can function normally via the other terminal. Furthermore, heat generation and sparking due to the poor junction can be prevented in each case.

As described in the above exemplary embodiments, each lead part 22 and 23 of the driving voltage generating unit 20 is provided with a plurality of lead terminals 22a, 22b, 23a, and 23b, so that even though any one of the lead terminals may be poorly joined or may become disconnected, the driving voltage generating unit can function normally. Consequently, the operation reliability of the back light driving device can be enhanced, and also heat generation and sparking due to the poor junction can be prevented.

Although only a few exemplary embodiments of the present invention have been shown and described, it will be appreciated by those skilled in the art that changes may be made in these embodiments without departing from the scope of the invention as defined in the appended claims.

## Claims

1. A back light driving device comprising an inverter circuit connected to a lamp, the inverter circuit comprising:
a driving voltage generating unit provided with a plurality of leads for supplying a driving voltage to the lamp, wherein each of the leads comprises a plurality of lead terminals.

2. The back light driving device of claim 1, wherein the plurality of lead terminals of each of the leads comprises:
a main lead terminal connected to the driving voltage generating unit; and
at least a subsidiary lead terminal connected to the main lead terminal.

3. The back light driving device of claim 1, wherein the driving voltage generating unit comprises a transformer.

4. The back light driving device of claim 2, wherein the driving voltage generating unit comprises a transformer.

5. A driving voltage generating unit, comprising:
a transformer;
a plurality of leads electrically coupled to the transformer, wherein each of the leads comprises a plurality of lead terminals.

6. The driving voltage generating unit of claim 5, wherein the plurality of lead terminals of each of the leads comprises:
a main lead terminal electrically coupled to the transformer; and
at least a subsidiary lead terminal electrically coupled to the main lead terminal.

7. A method for electrically coupling a driving voltage generating unit, comprising the steps of:
providing a plurality of lead parts electrically coupled to the driving voltage generating unit, wherein each of the lead parts comprises a plurality of lead terminals;
electrically coupling a main lead terminal of said plurality of lead terminals to form a first junction; and
electrically coupling at least a subsidiary lead terminal of said plurality of lead terminals to form a second junction, wherein the first subsidiary lead terminal is diverged from the main lead terminal to form a parallel circuit.
